# EUROPÄISCHE PATENTANMELDUNG

(11) **EP 2 682 919 A1**
(43) Veröffentlichungstag der Anmeldung: **08.01.2014**
(21) Anmeldenummer: 13175009.3
(22) Anmeldetag: 04.07.2013
(51) Int. Cl.: G07C 5/00, G01R 31/00, G06F 9/48, G07C 5/08

(54) **Diagnosevorrichtung für ein Kraftfahrzeug**

(30) Priorität: 06.07.2012 DE 102012106077
(71) Anmelder: Softing AG, 85540 Haar (DE)
(72) Erfinder: Schaller, Dieter, 70599 Stuttgart (DE)
(74) Vertreter: Karl, Christof

(57) **Zusammenfassung**

Vorrichtung zur Steuerung der Kommunikation zwischen einem Host-System und Steuergeräten in einem Bordnetz eines Kraftfahrzeuges, mit folgenden Merkmalen: eine Diagnose-Schnittstelle, insbesondere eine On-Board-Diagnose-, OBD, Schnittstelle, zur Kommunikation mit den Steuergeräten, eine WLAN-Schnittstelle zur Kommunikation mit dem Host-System, ein WLAN-Modul zur Steuerung der Datenübertragung zwischen der Vorrichtung und dem Host-System über die WLAN-Schnittstelle, ein Diagnose-Modul zur Aufbereitung von Daten zur Kommunikation mit dem Rost-System, ein Fahrzeugkommunikations-Modul zur Steuerung der Kommunikation zwischen dem Diagnose-Modul und den Steuergeräten, wobei das WLAN-Modul und das Diagnose-Modul in einen gemeinsamen WLAN-Prozessor realisiert sind und das Fahrzeugkommunikations-Modul in einem separaten Fahrzeugkommunikatians-Prozessor mit einem echtzeitfähigen Betriebssystem realisiert ist.

## Beschreibung

Die Erfindung betrifft eine Vorrichtung zur Steuerung der Kommunikation zwischen einem Host-System und Steuergeräten in einem Bordnetz eines Kraftfahrzeugs. Solche Vorrichtungen sind im Stand der Technik auch als VCI (Vehicle Communication Interface) bekannt.

In modernen Kraftfahrzeugen kommt eine große Anzahl von Steuergeräten und Steuerungscomputern sowie Sensoreinrichtungen zum Einsatz. Sie sind in dem Kraftfahrzeug über ein Bordnetz miteinander verbunden, das als Bussystem realisiert ist, und können Daten untereinander austauschen sowie über eine Schnittstelle von einem externen übergeordneten Host-System angesprochen werden. Die Steuergeräte, Steuerungscomputer und Sensorvorrichtungen, im Folgenden insgesamt als Steuergeräte bezeichnet, führen eine große Vielzahl verschiedener Steuerungs- und Überwachungsfünktionen durch und umfassen komplexe Systeme, wie Motor- und Getriebe-Steuerungen, Antiblockiersysteme und dergleichen. Da die Steuergeräte zeitkritische Prozesse steuern können müssen, beispielsweise eine Bremsverzögerung, müssen sie innerhalb eines engen Zeitrasters bzw. in Echtzeit arbeiten. Dies bedingt, dass auch die Kommunikation der Steuergeräte untereinander in diesem engen Zeitraster und somit in Echtzeit erfolgt. Zur externen Kommunikation mit den Steuergeräten des Kraftfahrzeugs wird somit ebenfalls ein echtzeitfähiges System benötigt, das im Stand der Technik allgemein als VCI (Vehicle Communication Interface) bezeichnet wird. Eine VCI ist ein Zwischenglied oder eine Schnittstelle zwischen einem nicht-echtzeitfähigen Host-System, wie einem Bedienungs- oder Diagnoserechner, meist einem handelsüblichen PC, und der Echtzeitkommunikation des Fahrzeugs. Für die Kommunikation mit den Steuergeräten des Kraftfahrzeugs gibt es eine Reihe fahrzeugspezifischer Protokolle, beispielsweise die genormten Protokolle für K-Line, L-Line oder CAN (Controller Area Network)-Bus. Zusätzlich übernimmt die VCI auch Hardware-Aufgaben, wie die Anpassung des Host-Systems an die Fahrzeugspannungen des Kraftfahrzeugs, z.B. 12V oder 24V, sowie die galvanische Trennung des Bordnetzes des Kraftfahrzeugs von dem Host-System. Die Diagnosebusse K-Line und CAN z. B. haben andere physikalisch Eigenschaften als ein PC, daher kann das VCI auch den Physical Layer der Kommunikation (ISO/OSI Modell) übernehmen. Das VCI ist dann nach dem ISO/OSI Modell ein Gateway, das je nach Protokoll die Schichten 1 bis 7 umsetzt. Abgesehen von der Kommunikation kann ein VCI auch weitere Aufgaben erfüllen, wie die Bereitstellung digitaler Eingänge, z.B. Zündungserkennung; digitaler Ausgänge, z.B. Schalten von Fahrzeugfunktionen; analoger Eingänge, z.B. Messen der Batteriespannung; und analoger Ausgänge, z.B. zur Unterstützung spezieller Protokolle.

Eine VCI leistet im Wesentlichen drei Aufgaben, nämlich die Kommunikation mit den Steuergeräten in dem Bordnetz des Kraftfahrzeugs in Echtzeit, die Aufbereitung der Daten zur Kommunikation mit dem übergeordneten Host-System unter Berücksichtigung verschiedener Kommunikationsprotokolle und das Senden und Empfangen von Daten an den und von dem übergeordneten Host-System. Für die Kommunikation mit dem übergeordneten Host-System ist es von verschiedenen, auf dem Markt erhältlichen Geräten bekannt, USB-Schnittstellen, Ethernet-Schnittstellen, WLAN-Schnittstellen oder auch die Übertragung mittels Bluetooth oder GSM/UMTS zu unterstützen. Hauptaufgabe der VCI ist somit die Bereitstellung einer Kommunikationsschnittstelle zwischen Fahrzeug und übergeordnetem Host-System, insbesondere für Diagnosezwecke, weshalb eine VCI auch als Diagnose-Schnittstelle bezeichnet wird. Darüber hinaus kann sie auch weitere Aufgaben übernehmen, wie die Aufzeichnung von Betriebsdaten des Kraftfahrzeugs, der zurückgelegten Strecke und aktueller Position (Datenlogger) bei Testfahrten, das Aufspielen neuer Firmware in das Bordnetz des Kraftfahrzeugs (Flashen) sowie das Protokollieren von Buszugriff und Verbindungsqualität (Analyser). Auf dem Markt erhältliche Diagnoseschnittstellen, welche eine oder mehrere der obengenannten Aufgaben erfüllen, sind beispielsweise das Wireless Diagnostic Interface WDI und das Diagnose-Interface MDI-G der Daten- und Systemtechnik GmbH, Aachen, DE; der Diagnose-Funkkopf VAS 5054A der Softing AG, Haar, DE; und die drahtlose OBD-Schnittstelle "Intelligence Star Interface Logger" der Berger Electronic, Sindelfngen, DE. Eine Vorrichtung der gattungsgemäßen Art ist ferner beschrieben in der DE 10 2004 005 680 A1 der Bayerischen Motorenwerke AG sowie in der CN 102120441A der Actia Automotive Electronics. Weitere Diagnoseschnittstellen sind beschrieben in EP 0 374 998 B1, EP 1 992 932 A2 und EP 2 037 420 A2.

Zusammengefasst ist somit eine wichtige Aufgabe einer VCI, die Kommunikation zwischen einem übergeordneten Host-System wie einem PC, und dem Bordnetz eines Kraftfahrzeugs zu steuern. Die Kommunikation mit dem PC kann dabei beispielsweise über WLAN, ein USB-Anschluss oder ein Ethernet-Bus erfolgen, und die Kommunikation zu dem Bordnetz des Kraftfahrzeugs wird z.B. über eine OBD (on-Board-Diagnose)-Schnittstelle gemäß den Normen CAN oder K-Line abgewickelt. Zusätzlich kann die VCI Aufgaben wie Datenlogging und Flashen, aber auch beispielsweise die Aufgaben eines Simulators oder Protokollanalysers ausführen. Die Grundfunktion der ODB-Schnittstelle ist jedoch die Fehlerdiagnose, wobei Daten zur KFZ-Diagnose auf festgelegten OBD-Pins ausgelesen werden können. Der Rest der OBD-Pin-Belegung ist Hersteller spezifisch und ermöglicht mit Steuergeräten im Fahrzeug zu kommunizieren. Hintergrund der Kommunikation sind in der Regel Standard-Frage/Antwort-Szenarien; sollte ein Steuergerät nicht erwartungsgemäß antworten, führt dies zu einer Fehlerdiagnose. Führt man z.B. die Diagnose während der Fahrzeugproduktion durch, in dem das VCI mitfährt und die Kommunikation mit den Steuergeräten überwacht, ermöglicht dies den Einsatz eines optimierten Produktionsablauf, da das Fahrzeug nicht erst vollständig zusammengebaut und am Ende getestet wird, sondern Fehler direkt nach der Montage durch den Funktionstest der Steuergeräte ermittelt werden können.

Die Kommunikation zwischen dem Host-System und dem Bordnetz des Kraftfahrzeugs läuft üblicherweise wie folgt ab: Das Host-System initialisiert die Verbindung zur VCI, z.B. über ein WLAN gemäß dem TCP/IP Protokoll. Anschließend teilt das Host-System der VCI mit, mit welchem Steuergerät in dem Bordnetz kommuniziert werden soll, und die VCI startet die Kommunikation zu dem Steuergerät gemäß dem fahrzeugspezifischen Kommunikationsprotokoll, z.B. CAN oder K-Line. Das Host-System sendet eine Anfrage an die VCI, und die VCI wandelt diese Anfrage in eine Anfrage gemäß dem fahrzeugspezifischen Kommunikationsprotokoll um und sendet die Anfrage an das Steuergerät. Die Antwort des Steuergerätes wird nach entsprechender Rückumwandlung der Protokolle von der VCI an das Host-System zurückgesandt. In der Praxis erwartet das Steuergerät die Anfragen in einem herstellerspezifischen Zeitrahmen. Z.B. muss bei einem (fiktiven) Steuergerät der Abstand zwischen zwei CAN-Frames 100ms sein, darf aber nicht höher als 1s sein. Die CAN-Frames sollten daher möglichst genau mit 100ms gesendet werden, damit die höchstmögliche Übertragungsrate erreicht wird.

Zur Realisierung der oben beschriebenen Aufgaben weisen die auf dem Markt erhältlichen Diagnoseschnittstellen (VCIs) einen spezialisierten Mikroprozessor mit einem Echtzeitbetriebssystem auf, der die Kommunikation zwischen dem übergeordneten Host-System und dem Bordnetz des Kraftfahrzeugs steuert. In der Praxis wird häufig ein Mikrocontroller verwendet, also einen Mikroprozessor mit RAM, ROM und Kommunikationsschnittstellen. Dadurch können Hardwareaufwand, Stromverbrauch und Kosten gering gehalten werden. Unter dem Betriebssystem läuft eine eingebettete Software oder Firmware, welche die Umsetzung der Anfragen und Antworten zwischen Host-System und Steuergeräten des Kraftfahrzeugs gemäß den spezifizierten Kommunikationsprotokollen vornimmt und die jeweiligen Eigenheiten der fahrzeugspezifischen Protokolle kennt. Bei dieser Protokollumsetzung bleiben die Nutzdaten, z.B. Betriebsparameter, die von den Steuergeräten gesandt werden, unverändert.

Sofern die Diagnoseschnittstelle auch WLAN-fähig sein soll, gibt es im Stand der Technik verschiedenen Lösungen. Ein Ansatz besteht darin, einen WLAN-Zugang über eine PCI- oder PCI Express-Schnittstelle bereitzustellen, wobei dies einen relativ hohen Platzbedarf für Verbindungsleitungen und Treiberbausteine und einen hohen Stromverbrauch mit sich bringt. Eine weitere Lösungsmöglichkeit zur Bereitstellung eines WLAN-Zugangs besteht in der Nutzung einer USB-Schnittstelle. Dies führt jedoch zu hohen Latenzzeiten und ist nicht für jeden WLAN-Standard realisierbar, beispielsweise nicht für die 802.11n Norm, welche mehrere Kanäle unterstützt. Anderen Lösungen greifen daher auf ein zusätzliches WLAN-Modul zurück, das sich jedoch in kleineren Diagnoseschnittstellen nicht unterbringen lässt und somit extern zu der eigentlichen VCI vorgesehen werden muss. Fertige WLAN-Module sind entweder zu groß oder haben die falsche Bauform, daher passen sie nicht in Diagnoseschnittstellen, die ein bestimmtes Bauvolumen einhalten sollen. WLAN-Module, die alle WLAN-Anforderungen erfüllen, brauchen also zu viel Strom oder sind zu groß.

Theoretisch wäre es auch möglich, dass das Host-System, beispielsweise ein PC, direkt mit den Steuergeräten in dem Bordnetz des Kraftfahrzeugs kommuniziert. Dann müsste allerdings die PC-Software alle Varianten der fahrzeugspezifischen Protokolle unterstützen können. Selbst bei einem einfachen Kraftfahrzeug kann es jedoch vorkommen, dass mehrere verschiedene Protokolle verwendet werden, z.B. das Protokoll KWP 2000 über K-Line und das Protokoll UDS über den CAN-Bus. Jeder PC müsste dann entsprechend mit großem Aufwand programmiert werden. Eine Schwierigkeit beruht darauf, dass der größte Teil der Fahrzeugkommunikation nicht normiert und der Öffentlichkeit nicht bekannt ist; daher müsste jede PC-Software die exakten Protokolle und OBD-Pins kennen. Dies ist jedoch von den Herstellern nicht gewollt. Auf einem PC ist es auch nur mit unverhältnismäßig hohem Aufwand möglich, die Timings und Besonderheiten der KFZ-Schnittstellen zu erfüllen. Die normalen PC-Anwendungen würden dadurch in ihrer Rechenleistung zu stark belastet. Je nach Protokoll müssen nämlich die Timings bis zum einzelnen Bit kontrolliert werden können. Zudem benötigt man eine Hardware, welche für den physikalischen Anschluss sorgt (Umsetzung der CAN Signale). Diese Hardware müsste dann entweder über PCI oder USB an den PC angebunden werden, wofür ein Mikroprozessor benötigt wird. Diese Lösung hat sich daher in der Praxis nicht durchgesetzt, und es wird für die Kommunikation zwischen Host-System und Bordnetz regelmäßig eine VCI eingesetzt.

Es ist eine Aufgabe der Erfindung, eine Vorrichtung zur Steuerung der Kommunikation zwischen einem Host-System und Steuergeräten in einem Bordnetz eines Kraftfahrzeugs anzugeben, die kompakt ist und eine geringe Leistungsaufnahme hat und gleichwohl verschiedene Schnittstellen zur Kommunikation mit einem Host-System bereitstellt, die jedenfalls eine WLAN-Schnittstelle umfassen.

Diese Aufgabe wird durch eine Vorrichtung gemäß Patentanspruch 1 gelöst. Bevorzugte Ausführungen der Erfindung sind in den abhängigen Ansprüchen angegeben.

Die Erfindung sieht eine Vorrichtung zur Steuerung der Kommunikation zwischen einem Host-System und Geräten in einem Netzwerk, insbesondere in einem Bordnetz eines Kraftfahrzeugs vor. Die Geräte können z.B. Steuergeräte, Sensoren und Steuereinheiten eines Kraftfahrzeuges oder einer Fertigungsanlage sein. Die Vorrichtung umfasst: eine Diagnoseschnittstelle, insbesondere eine OBD-Schnittstelle, zur Kommunikation mit den Steuergeräten und eine WLAN-Schnittstelle zur Kommunikation mit dem Host-System. Zur Steuerung der Datenübertragung zwischen der erfindungsgemäßen Vorrichtung und dem Host-System über die WLAN-Schnittstelle ist ein WLAN-Modul vorgesehen, und zur Steuerung der Kommunikation zwischen der erfindungsgemäßen Vorrichtung und den Steuergeräten ist ein Kommunikations-Modul vorgesehen. Ein Diagnose-Modul dient der Aufbereitung der Daten innerhalb der erfindungsgemäßen Vorrichtung zur Kommunikation mit dem Host-System. Erfindungsgemäß sind das WLAN-Modul und das Diagnose-Modul in einem gemeinsamen WLAN-Prozessor realisiert, und das Kommunikations-Modul ist in einem separaten Kommunikations-Prozessor mit einem echtzeitfähigen Betriebssystem realisiert. Der WLAN-Prozessor muss dagegen kein echtzeitfähiges Betriebssystem aufweisen. Das Kommunikations-Modul ist in einer Ausgestaltung ein Fahrzeugkommunikations-Modul, und der Kommunikations-Prozessor ist ein Fahrzeugkommunikations-Prozessor. Im Verhältnis zu den bekannten Diagnoseschnittstellen ist bei der erfindungsgemäßen Vorrichtung somit die Aufgabenverteilung auf die verschiedenen Komponenten der Vorrichtung anders gelöst. Anders als bei der Erfindung wurden im Stand der Technik die Funktionen des Diagnosemoduls und des Fahrzeugkommunikationsmoduls nämlich in einem spezialisierten Mikroprozessor mit einem Echtzeitbetriebssystem realisiert, während für die (optionale) Bereitstellung einer WLAN-Schnittstelle gegebenenfalls ein separates Funkmodul vorgesehen wurde. Der Schwerpunkt der Rechenleistung der Hardware lag hierbei in dem Diagnosemodul, das aufgrund der Integration mit dem Fahrzeugkommunikationsmodul in einem Echtzeitbetriebssystem laufen musste; hierfür wurden in der Praxis relativ leistungsfähige und teure Spezialprozessoren für die Fahrzeugdiagnose eingesetzt. Durch die erfindungsgemäße neue Aufgabenverteilung innerhalb der Kommunikationsvorrichtung ist es möglich, die rechenaufwändigeren Funktionen des Diagnosemoduls in den WLAN-Prozessor zu verlegen, der ein nicht echtzeitfähiges Betriebssystem haben kann. Dabei nutzt die Erfindung die Tatsache aus, dass durch die große Verbreitung von WLAN-Netzen auf dem Massenmarkt für WLAN-Prozessoren eine ständige Leistungssteigerung erfolgt ist. Da im Stand der Technik auch in WLAN-Netzen zu Erhöhung der Datensicherheit immer komplexere Verschlüsselungstechnologien eingeführt wurden, musste die Rechenleistung der auf dem Markt erhältlichen WLAN-Prozessoren gesteigert werden, so dass diese hinsichtlich ihrer Rechenleistung den heute verfügbaren Spezialprozessoren für Fahrzeug-Diagnoseschnittstellen überlegen sind. Aufgrund des großen wirtschaftlichen Drucks des Massenmarktes wurden in die bekannten WLAN-Prozessoren zudem immer mehr WLAN-Funktionalitäten integriert, so dass es hierfür heute Ein-Chip-Lösungen gibt. Dabei wurden die elektrische Leistungsaufnahme und der Platzbedarf optimiert, während es einen ähnlichen Trend bei den bekannten Steuerungscomputern im Automobilmarkt nicht gibt.

Die Erfindung verlagert nun die Aufgaben der Aufbereitung der Daten zur Kommunikation mit dem Hostsystem, also die Aufgaben des Diagnosemoduls, und die Aufgaben der Kommunikation mit dem übergeordneten Host-System in einen solchen, auf dem Markt verfügbaren WLAN-Prozessor, während für die verbleibende Aufgabe der Kommunikation mit den Steuergeräten des Kraftfahrzeuges, also die Aufgaben des Fahrzeugkommunikations-Moduls, einem einfachen Fahrzeugkommunikations-Prozessor zugewiesen werden können. Nur dieser Fahrzeugkommunikations-Prozessor muss ein Echtzeitbetriebssystem haben, kann aber aufgrund der reduzierten Aufgaben mit geringerem Platzbedarf und reduzierter Stromaufnahme konfiguriert werden. Der WLAN-Prozessor, der auch die Aufgaben des Diagnosemoduls übernimmt, muss dagegen nicht echtzeitfähig sein und kann demzufolge ebenfalls sowohl hinsichtlich des Platzbedarfs als auch hinsichtlich der elektrischen Leistungsaufnahme optimiert werden. Dabei nutzt die Erfindung, wie oben erläutert, aus, dass die heute verfügbaren WLAN-Prozessoren eine hohe Rechenleistung haben und unter Standard-Betriebssystemen, wie Linux, arbeiten und dass sie hinsichtlich ihrer prozessoralen Fähigkeiten anderen Rechnerchips vergleichbar und damit auch für andere Datenverarbeitungsaufgaben als die WLAN-Kommunikation geeignet sind.

Da die verfügbaren WLAN-Prozessoren jedoch hinsichtlich ihrer Ein- und Ausgänge auf ihre Netzwerkfunktionalitäten, wie WLAN und Ethernet, beschränkt sind und in der Regel nicht echtzeitfähig sind, wird für die Kommunikation mit dem Kraftfahrzeug eine zusätzliche spezialisierte Hardware, nämlich der Fahrzeugkommunikations-Prozessor vorgesehen. Als Fahrzeugkommunikations-Prozessor eignet sich jeder Chip, der die notwendigen Fahrzeugkommunikationsschnittstellen sowie eine Schnittstelle zu dem WLAN-Prozessor integriert hat. Er sollte sehr gut echtzeitfähig sein, z.B. eine Interrupt-Struktur aufweisen, benötigt aber keine besonderen prozessoralen Fähigkeiten und kein komplexes Betriebssystem. Er kann daher relativ klein sein und einen niedrigen Stromverbrauch haben.

Eine mögliche Schnittstelle zwischen dem WLAN-Prozessor und dem Fahrzeugkommunikations-Prozessor ist eine Ethernet-Schnittstelle, die sehr leistungsfähig ist und wenige Anschlüsse und somit einen geringen Platzbedarf hat.

Die erfindungsgemäße Vorrichtung hat zusätzlich zu der WLAN-schnittstelle zur Kommunikation mit dem Hostsystem vorzugsweise auch eine USB-Schnittstelle und/oder eine Ethernet-Schnittstelle, die jeweils auch durch das WLAN-Modul angesteuert werden.

Neben der Aufbereitung der Daten zur Kommunikation mit dem Host-System, kann das Diagnose-Modul auch dazu eingerichtet sein, Betriebsdaten der Steuergeräte zu erfassen und zwischenzuspeichern, wobei die Fabrzeugdiagnose letztendlich von dem übergeordneten Hostsystem ausgeführt werden wird. Dieses Mitschreiben von Betriebsdaten, auch als Loggen bezeichnet, kann beispielsweise der Untersuchung von Fehlern oder der schlichten Erfassung von Betriebsdaten, wie Verbrauch und Geschwindigkeit dienen. Umgekehrt kann das Diagnosemodul auch dazu genutzt werden, die Software oder Firmware in den Steuergeräten des Kraftfahrzeuges zu aktualisieren, insbesondere durch sogenanntes Flashen.

Das WLAN-Modul kann neben der Steuerung der Kommunikation zu dem übergeordneten Host-System auch dazu eingerichtet sein, Parameter in Bezug auf die Verbindungsqualität zu ermitteln und zu speichern. Ferner kann es dazu eingerichtet sein, einen WLAN-Zugangspunkt oder Access-Point einzurichten, um alle in einem Kraftfahrzeug vorhandenen WLAN-fähigen Geräte miteinander zu verbinden, beispielsweise tragbare Rechner zur Datenspeicherung, PDAs (Personal Digital Assistant) oder Smart Pads oder Tablet-Computer, wie z.B. das iPad etc., zur Anzeige von Daten sowie zusätzliche Geräte wie GPS- oder UMTS-Gateways. Das WLAN-Modul kann auch die Kommunikation zwischen Fahrzeugen (Car-to-Car Communication) unterstützen, um beispielsweise bei Erprobungsfahrten Daten in einem Hauptfahrzeug zu sammeln, so dass diese schon während der Fahrt ausgewertet und verglichen werden können.

Eine Grundfunktion der erfindungsgemäßen Vorrichtung ist jedoch die Diagnose von Steuergeräten, die Durchführung von Tests an den Steuergeräten des Kraftfahrzeuges und die Aktualisierung von Software oder Firmware im Fahrzeug während der Produktion oder Wartung der Kraftfahrzeuge. Durch das Bereitstellen unterschiedlicher Schnittstellen und unterschiedlicher Gehäuseformen ist die erfindungsgemäße Vorrichtung besonders vielseitig einsetzbar und kann auch dann, wenn sie an schlecht zugänglichen Stellen in dem Fahrzeug montiert ist, mit externen Hostsystemen kommunizieren, ohne dass beispielsweise eine hinderliche Verkabelung vorgesehen werden muss. Durch das sehr leistungsfähige WLAN-Modul und integrierte WLAN-Antennen kann die Vorrichtung sogar bei geschlossenen Türen aus dem Fahrzeug funken.

Wie bereits erläutert, kann der WLAN-Prozessor ein Allzweck-Betriebssystem, wie Linux, aufweisen. Insbesondere kann er mit einer höheren Taktrate und mit einem größeren Speicher ausgestattet sein als das Echtzeitbetriebssystem des Fahrzeugkommunikations-Prozessors. Dabei ist die Leistungsaufnahme des Fahrzeugkommunikation-Prozessors regelmäßig geringer als die Leistungsaufnahme des WLAN-Prozessors. Die Leistungsaufnahme beider Prozessoren ist jedoch wiederum deutlich niedriger als die der bisher verwendeten spezialisierten Mikroprozessoren in den auf dem Markt erhältlichen Diagnoseschnittstellen.

In einer besonders bevorzugten Ausführung der Erfindung kann der WLAN-Prozessor in einen Stromsparmodus gesetzt werden, und der Fahrzeugkommunikations-Prozessor kann dazu eingerichtet sein, bei Empfang einer Nachricht von dem Kraftfahrzeug dem WLAN-Prozessor zu aktivieren oder "aufzuwecken". Hierzu kann der Fahrzeugkommunikations-Prozessor die Fahrzeugkommunikation abhören. In einer anderen Ausführungsform kann auch ein Bewegungssensor vorgesehen sein, der mit dem Fahrzeugprozessor gekoppelt ist und bei Bewegung den Fahrzeugprozessor weckt, um das WLAN-Modul zu aktivieren.

Weiterhin sind der WLAN-Prozessor und der Fahrzeugkommunikations-Prozessor vorzugsweise auf einer Leiterplatte angeschlossen, die eine vollständige galvanische Trennung zwischen der Schnittstelle zur Kommunikation mit dem Host-System und der Diagnoseschnittstelle zur Kommunikation mit den Steuergeräten des Kraftfahrzeuges vorsieht. Sofern zwischen dem WLAN-Prozessor und dem Fahrzeugkommunikations-Prozessor als Schnittstelle Ethernet gewählt wird, hat dies den zusätzlichen Vorteil, dass die gewünschte galvanische Trennung zwischen den beiden Prozessoren bereits inhärent durch diese Schnittstelle realisiert wird. Es wird hierzu einfach die in der Ethernetschnittstelle an sich schon vorhandene galvanische Trennung genutzt.

Die erfindungsgemäße Vorrichtung ist vorzugsweise in einem kleinen kompakten Gehäuse untergebracht, dessen Abmessungen nicht mehr als etwa 120 mm x 50 mm x 25 mm betragen und dass somit innerhalb des normierten Bauraums gemäß der ISO 15031-3 2004 G Norm untergebracht werden kann (zzgl. Toleranzen gem. Norm). Damit ermöglicht es die Erfindung erstmals eine Diagnoseschnittstelle für ein Kraftfahrzeug bereitzustellen, die innerhalb der genannten normierten Bauraumgrenzen bleibt, eine Vielzahl unterschiedlicher externer Schnittstellen, wie USB, Ethernet und WLAN, einschließlich der darauf basierenden Verschlüsselungen, unterstützt und eine so geringe Leistungsaufnahme hat, dass sie über einen USB-Anschluss versorgt werden kann.

In der bevorzugten Ausführung der Erfindung weist das Gehäuse keine mechanischen Schalter auf und ist aus einem oder mehreren Spritzgussteilen hergestellt, wobei ein Stecker der Diagnoseschnittstelle, insbesondere ein OBD-Stecker, an eines der Spritzgussteile angeformt ist. Dies erlaubt es, eine absolut werkstatttaugliche Diagnoseschnittstelle mit dichtem Gehäuse und ohne aktive Kühlung bereitzustellen.

Zur Steuerung der erfindungsgemäßen Vorrichtung können kapazitive Schalter vorgesehen sein.

Die erfindungsgemäße Vorrichtung kann in einer Ausgestaltung der Erfindung zur Realisierung der Ethernet-Schnittstelle oder einer anderen drahtgebundenen Schnittstelle ein elektrisches Verbindungssystem mit Kontaktelementen und wenigstens einer Magnetvorrichtung aufweisen, um die Kontaktelemente eines Adapters mit den Kontaktelementen der Ethernet-Schnittstelle in Kontakt zu bringen und zu halten. Derartige Verbindungssysteme sind beispielsweise beschrieben in der DE 10 2010 028 791 A1. In einer besonders vorteilhaften Ausgestaltung der Erfindung kann an dem Adapter ein Schalter oder Taster angebracht sein, der mit einem Rücksetzeingang der Ethernet-Schnittstelle verbunden wird, um die erfindungsgemäße Vorrichtung zurückzusetzen. Dies ermöglicht ein einfaches Zurücksetzen der Diagnosevorrichtung über einen Taster, der nicht an der Diagnosevorrichtung selbst vorgesehen ist und somit nicht leicht versehentlich oder unautorisiert betätigt werden kann.

Die Erfindung ist hier im Kontext einer Diagnoseschnittstelle für ein Kraftfahrzeug beschrieben, wobei ein Hostgerät mit Steuergeräten in dem Bordnetz des Kraftfahrzeuges über ein WLAN-Modul und ein Fahrzeugkommunikations-Modul kommunizieren kann. Die Erfindung ist jedoch nicht auf diese Anwendung beschränkt und kann auch eingesetzt werden zur Kommunikation mit anderen Arten von Geräten in anderen Anlagen, z.B. Fertigungsanlagen oder dergleichen.

Die Erfindung ist im Folgenden anhand bevorzugter Ausführungen mit Bezug auf die Zeichnungen näher erläutert.
- Fig. 1: eine schematische Darstellung einer Diagnoseschnittstelle gemäß dem Stand der Technik;
- Fig. 2: eine schematische Darstellung der erfindungsgemäßen Vorrichtung;
- Fig. 3a und 3b: perspektivische Darstellungen der erfindungsgemäßen Vorrichtung von oben bzw. von unten;
- Fig. 4a und 4b: perspektivische Darstellungen der erfindungsgemäßen Vorrichtung gemäß einer zweiten Ausführungsform von oben bzw. von unten;
- Fig. 5a und 5b: eine Seitenansicht und eine Draufsicht eines Adapters für die erfindungsgemäße Vorrichtung.

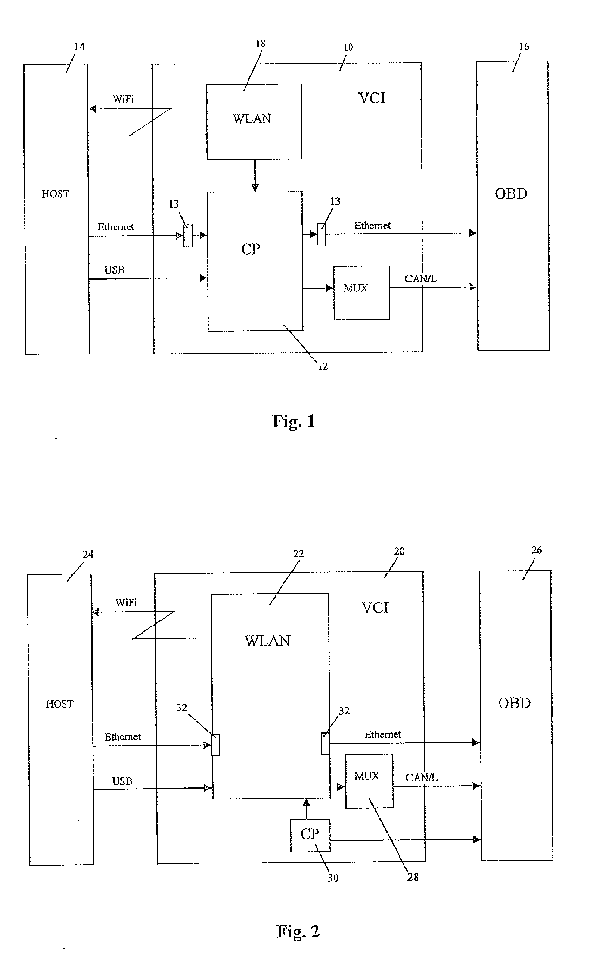

Fig. 1 zeigt schematisch in Form eines Blockdiagramms die Aufgabenverteilung in einer Diagnoseschnittstelle oder einem VCI (vehicle communication interface) gemäß dem Stand der Technik. Das Herz der Diagnoseschnittstelle 10 ist ein echtzeitfähiger Kommunikationsprozessor 12, der die Kommunikation zwischen einem übergeordneten Host-System 14 und den Steuergeräten eines Kraftfahrzeuges 16 abwickelt, einschließlich der notwendigen Protokollübersetzungen, und die Daten von den Steuergeräten aufbereitet. Hierzu unterstützt der Kommunikationsprozessor 12 z.B. eine Ethernet- und eine USB-Schnittstelle zu dem übergeordneten Host-System 14 sowie eine OBD-Schnittstelle zum Kraftfahrzeug. Der Kommunikationsprozessor enthält in der Regel eine Firmware, die es erlaubt, Statusmeldungen an das übergeordnete Host-System zu senden und Änderungen der Zustände der Diagnoseschnittstelle selbst oder der angeschlossenen Steuergeräte in Echtzeit zu erfassen und zu kommunizieren. Der Kommunikationsprozessor 12 ist ferner in der Regel so ausgelegt, dass er eine Vielzahl von parallelen Kanälen verwalten kann. Er kann z.B. für die Betriebssysteme Microsoft Windows oder Linux ausgelegt sein.

Um mit dem übergeordneten Host-System 14 auch drahtlos kommunizieren zu können, verwenden die Diagnoseschnittstellen 10 des Standes der Technik ein Funkmodul 18, das je nach Bauform extern angeschlossen oder in ein einheitliches Gehäuse der Diagnoseschnittstelle integriert sein kann. Dies ist beispielsweise ein separates WLAN-Modul 18, welches die Daten von dem Kommunikationsprozessor 16 an das Host-System 14 überträgt. Das WLAN-Modul 18 kann an den Kommunikationsprozessor 12 beispielsweise über eine Ethernet-Schnittstelle, eine USB-Schnittstelle oder eine PCIe-Schnittstelle angeschlossen sein. Ferner kann, je nach Anforderung, der Kommunikationsprozessor 12 auch noch eine Ethernet-Schnittstelle zu dem Fahrzeug 16 bereitstellen.

Die bekannten Lösungen des Standes der Technik haben eine Grundstruktur, die zwei leistungsfähige Prozessoren erfordert, mit dem damit einhergehenden hohen Platzbedarf und Stromverbrauch. Die Leistungsaufnahme der Diagnoseschnittstelle liegt im Bereich von ungefähr 5 Watt. Versucht man die Lösung des Standes der Technik in kleine Gehäuseformen zu integrieren, so entstehen erhebliche Wärmeprobleme. Eine Integration der erfindungsgemäßen Funktionen beispielsweise in ein Gehäuse, das den normierten Bauraum gemäß der ISO 15031-3 2004 G Norm einhält (ca. 120 mm x 50 mm x 25 mm) war bisher nicht möglich. Auch liegt bei diesen Lösungen des Standes der Technik der Stromverbrauch deutlich über 500 mA, so dass eine Stromversorgung beispielsweise über einen USB-Anschluss nicht möglich ist.

Ein weiterer Nachteil der Lösung des Standes der Technik ist, dass zur Verbindung von Host-System 14 und Kommunikationsprozessor 12, von Kommunikationsprozessor 12 und Fahrzeugschnittstelle 16 sowie zur Verbindung von Kommunikationsprozessor 12 und Funkmodul 18 zusätzliche externe Switches 13 erforderlich sind, die auch separat eingestellt werden müssen. Die Switches 13 dienen zur Kopplung der einzelnen Netzwerksegmente, als Netzwerkweiche oder Verteiler, zur Weiterleitung der Datenpakete zwischen den genannten Komponenten. Ein externer Switch bedeutet auch höheren Platz- und Strombedarf und ggf. mehr Kosten.

Fig. 2 zeigt schematisch in Form eines Blockdiagramms ein Ausführungsbeispiel der erfindungsgemäßen Vorrichtung, die im Folgenden der Einfachheit halber auch als Diagnoseschnittstelle 20 bezeichnet ist. Die Diagnoseschnittstelle 20 gemäß der Erfindung bietet grundsätzlich dieselben Funktionen wie die Diagnoseschnittstelle 10 des Standes der Technik, verwendet jedoch andere Arten von Prozessoren und eine andere Aufgabenverteilung, so dass sich insgesamt der Platzbedarf und die Leistungsaufnahme deutlich verringern und gleichzeitig die Prozessorleistung erhöhen lässt. Erfindungsgemäß wird dies dadurch erreicht, dass die Diagnoseschnittstelle 20 den größten Teil der Aufgaben der Diagnoseschnittstelle einem WLAN-Prozessor 22 zuweist, der nicht echtzeitfähig sein muss, jedoch eine hohe Rechenleistung hat. Der WLAN-Prozessor 22 stellt eine WLAN-Schnittstelle zur Kommunikation mit dem Host-System 24 bereit und steuert die Datenübertragung zwischen dem Host-System 24 und der Diagnoseschnittstelle 20 über diese WLAN-Schnittstelle und übernimmt auch die Aufgabe der Aufbereitung der von den Steuergeräten des Fahrzeugs 26 kommenden Daten zur Kommunikation mit dem Host-System 24. Der WLAN-Prozessor 22 kann ein auf dem Markt erhältlicher WLAN-Chip sein, der gängige Schnittstellen wie Ethernet und USB unterstützt und zusätzlich eine hohe Rechenleistung hat. Im Vergleich zu den üblichen Kommunikationsprozessoren 12 des Standes der Technik sind Baugröße und Stromverbrauch des WLAN-Prozessors 22 etwa halbiert, die Prozessorleistung dagegen deutlich größer. Dies wird einerseits dadurch erreicht, dass der WLAN-Prozessor 22 nicht echtzeitfähig sein muss, andererseits macht sich die Erfindung die eingangs erläuterten rapiden Entwicklungen in der Nutzung der WLAN-Technik zu nutze.

Da die herkömmlichen WLAN-Prozessoren 22 jedoch nicht echtzeitfähig sind und auch die fahrzeugspezifischen Kommunikationsprotokolle nicht unterstützten, verwendet die erfindungsgemäße Diagnoseschnittstelle 22 zusätzlich einen kleinen Fahrzeugkommunikations-Prozessor 30, der im Vergleich zu sowohl dem Kommunikationsprozessor 12 des Standes der Technik als auch dem WLAN-Prozessor 22 gemäß der Erfindung eine geringe Rechenleistung hat, jedoch echtzeitfähig ist. Dieser Fahrzeugkommunikations-Prozessor 30 hat lediglich die Aufgabe, die Kommunikation zwischen dem WLAN-Prozessor 22 und den Steuergeräten des Fahrzeugs 26 zu steuern und die notwendigen Protokollübersetzungen vorzunehmen. Er nimmt also im Wesentlichen lediglich eine Protokollübersetzung vor. Mit dem WLAN-Prozessor 22 kann der Fahrzeugkommunikations-Prozessor 30 beispielsweise über eine Ethernet-Schnittstelle kommunizieren.

Die erfindungsgemäße Diagnoseschnittstelle kann im Vergleich zu den bekannten VCIs mit deutlich geringerem Bauraum und mit geringerem Stromverbrauch realisiert werden. Es ist möglich, das Bauvolumen auf eine Größe von etwa 120 mm x 50 mm x 25 mm einzuschränken, so dass die Schnittstelle in einem Gehäuse untergebracht werden kann, das in den normierten Bauraum hinein passt, der ursprünglich nur für die Zugangskabel definiert wurde, so dass der in seiner Dimensionierung den Anforderungen der ISO Norm mindestens entspricht. Der Stromverbrauch liegt bei maximal 500 mA und die Leistung bei rund 2,5 Watt. Es ist möglich, über den Fahrzeugkommunikations-Prozessor 30 sämtliche gängigen fahrzeugspezifischen Protokolle, wie CAN, K-Line und L-Line zu unterstützen. Der WLAN-Prozessor ermöglicht es, neben beispielsweise Ethernet- und USB-Schnittstellen alle gängigen WiFi-Standards gemäß der Norm 802.11 a/b/g/n zu unterstützen. Der USB-Anschluss dient in der Regel zur Konfiguration der Vorrichtung am PC.

Die Verwendung des WLAN-Prozessors 22 hat den zusätzlichen Vorteil, dass solche Prozessoren integrierte Switches 32 aufweisen, wodurch die Komplexität des Systems reduziert und der Platzbedarf weiter verringert wird.

Der WLAN-Prozessor 22 ist ebenso wie in der in Fig. 1 gezeigten Ausgestaltung des Standes der Technik über einen Signal-Multiplexer 28 mit der fahrzeugseitigen Schnittstelle verbunden. Über den Signal-Multiplexer kann der Host PC direkt mit dem Fahrzeug kommunizieren (z. B. über Ethernet DoIP).

Jeder der zwei Prozessoren 22, 30 wird für die Aufgaben genutzt, die er am besten lösen kann. Der WLAN-Prozessor 22 ist für Aufgaben verantwortlich, die eine hohe Rechenleistung erfordern, wie die WLAN-Anbindung, die Verwaltung des Datei-Systems, die Bereitstellung einer USB-Schnittstelle und die Abwicklung der Diagnose-Fahrzeugprotokolle, wie UDS und KWP2000, während der Fahrzeugkommunikations-Prozessor 30 für die Echtzeitsteuerung der Kommunikation zu den Steuergeräten des Fahrzeugs und die Transport-Protokollübersetzung verantwortlich ist. Der WLAN-Prozessor 22 kann beispielsweise ein Prozessor sein, der üblicherweise in DSL-Routern zum Einsatz kommt, während der Fahrzeugkommunikations-Prozessor ein Prozessor sein kann, der üblicherweise zur Fahrzeugdiagnose innerhalb des Kraftfahrzeugs zum Einsatz kommt. Während der WLAN-Prozessor beispielsweise ein General Purpose-Betriebssystem, wie Linux, aufweist und für großen Datendurchsatz und hohe Rechenleistung ausgelegt ist, hat der Fahrzeugkommunikations-Prozessor ein Echtzeit-Betriebssystem, wie z.B. QNX, und kann mit deutlich geringerer Rechenleistung, Speicher und Flash-Speicher arbeiten. Während der Takt des WLAN-Prozessors beispielsweise der Größenordnung von ≥ 500 MHz liegt, kann der Fahrzeugkommunikations-Prozessor mit einem Takt in der Größenordnung von 12-80 MHz arbeiten. Dadurch hat er einen minimalen Stromverbrauch. Zum Beispiel kann der WLAN-Prozessor ungefähr die zehnfache Leistung des KFZ-Prozessors, den zehnfachen Speicher und die zehnfache Taktfrequenz haben. Allgemeiner sollten die Prozessoren mit der optimalen CPU für ihre jeweiligen Aufgaben ausgelegt werden. Für WLAN braucht man, z.B. für die Verschlüsselung, viel Rechenleistung, für die KFZ-Diagnose nur sehr wenig. Es wird daher eine CPU für WLAN gewählt, die die Anforderungen erfüllt, und es wird eine KFZ-CPU gewählt, die ebenfalls die Anforderungen erfüllt - aber auch nicht mehr. Bei Übererfüllung können Probleme mit dem Platz- und Strombedarf und damit auch der Abwärme entstehen.

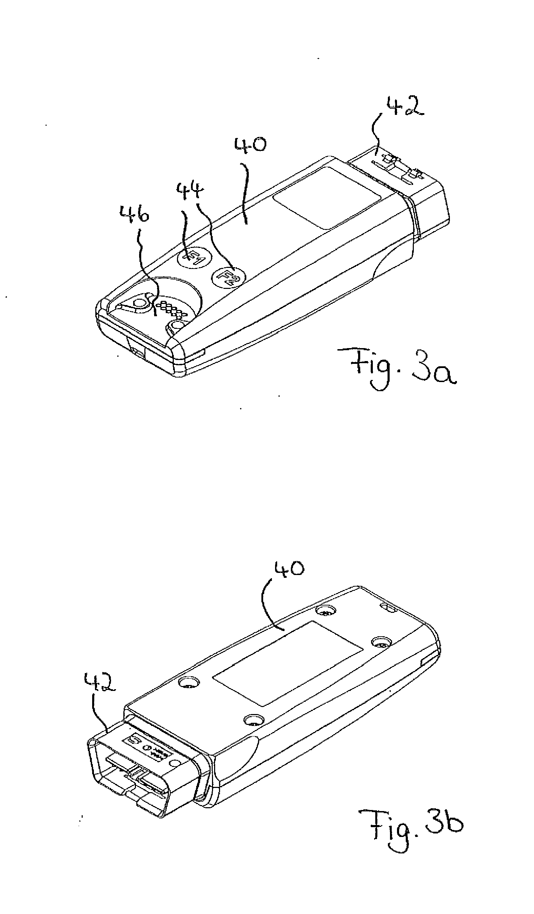

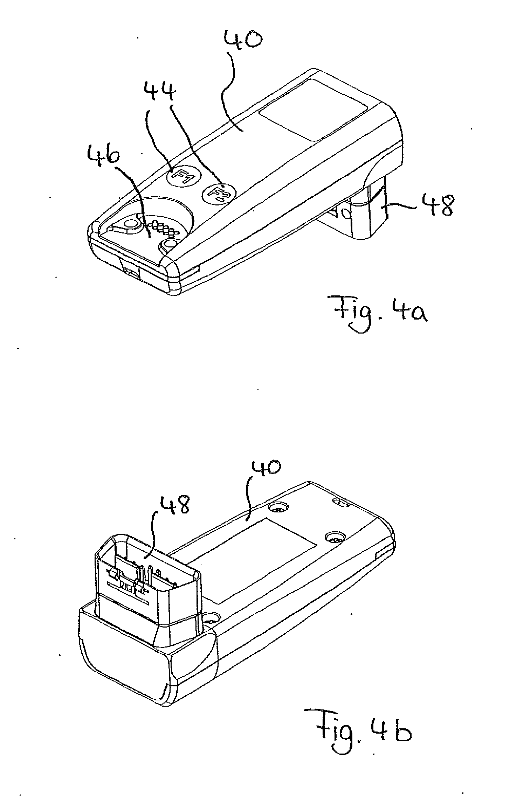

Fig. 3a und 3b zeigen perspektivische Darstellungen des Gehäuses der erfindungsgemäßen Vorrichtung von oben und von unten. Eine alternative Ausgestaltung des Gehäuses ist in den Fig. 4a und 4b dargestellt. Beide Gehäuse haben Abmessungen von nicht mehr als 120 mm x 50 mm x 25 mm.

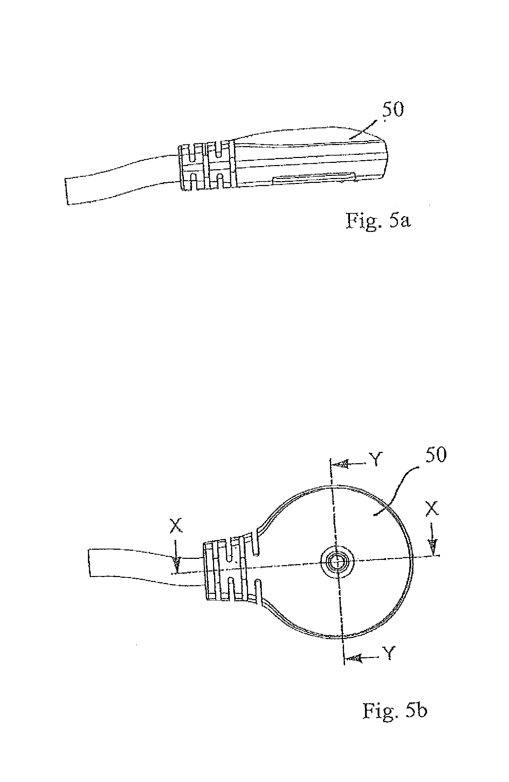

Das Gehäuse der Fig. 4a und 4b hat einen Hauptkörper 40, der z.B. aus zwei Spritzgussteilen zusammengesetzt ist. In einer Achse mit dem Hauptkörper 40 befindet sich ein OBD-Stecker 42 zum Anschluss an eine OBD-Schnittstelle eines Kraftfahrzeugs. Der OBD-Stecker 42 ist an eine der beiden Hälften des Gehäuses 40 angeformt. Auf der Oberseite des Gehäuses 40 sind ferner zwei Taster 44 angedeutet, hinter denen kapazitive Schalter (nicht gezeigt) untergebracht sein können, um die Diagnoseschnittstelle zu steuern, zu programmieren oder zurückzusetzen. Ferner sind an dem Gehäuse Kontaktstifte 46 nach außen geführt, um eine Ethernet-Schnittstelle oder andere drahtgebundene Schnittstellen der erfindungsgemäßen Vorrichtung nach außen zu führen. Diese Kontaktstifte 46 können beispielsweise mit einem Adapter 50, wie in Fig. 5a und 5b gezeigt, in Verbindung gebracht werden.

Das Gehäuse der Fig. 4a und 4b unterscheidet sich von dem der Fig. 3a und 3b durch den abgewinkelte OBD-Stecker 48, der ebenfalls in einem Spritzgussvorgang an eine der Gehäusehälften angeformt ist. Im Übrigen wird auf die Beschreibung der Fig. 3a und 3b Bezug genommen.

Der in Fig. 5a und 5b gezeigte Adapter 50 kann ein sogenannter MagCode™-Adapter sein, der mit den Kontaktstiften 46 in Verbindung gebracht und mittels Magneten in Position gehalten wird. Erfindungsgemäß kann vorgesehen sein, dass anstelle der in den Fig. 3a und 4a gezeigten Taster 44 oder zusätzlich zu diesen ein Taster oder Schalter an dem Adapter 50 vorgesehen ist, um die erfindungsgemäße Vorrichtung über einen oder mehrere Rücksetz- und Programmier-Eingänge zu steuern, zu programmieren oder zurückzusetzen. Diese Rücksetz- und Programmiereingänge sind über einen oder mehrere der Kontaktstifte 46 mit der Diagnoseschnittstelle gekoppelt. Die Erfindung ermöglicht es daher, die Diagnoseschnittstelle an sich vollständig ohne Schalter und Taster und insbesondere ohne eigene Rücksetzschalter/taster vorzusehen, indem die gewünschten Steuermöglichkeiten auf den Adapter 50 ausgelagert werden.

Anstelle eines MagCode-Adapters kann selbstverständlich auch jeder andere herkömmliche Verbindungsmechanismus zwischen Adapter 50 und Kontaktstiften 46 vorgesehen sein.

## Patentansprüche

1. Vorrichtung zur Steuerung der Kommunikation zwischen einem Host-System (24) und Geräten in einem Netzwerk (26), mit folgenden Merkmalen:
eine Diagnose-Schnittstelle zur Kommunikation mit den Geräten,
eine WLAN-Schnittstelle zur Kommunikation mit dem Host-System (24),
ein WLAN-Modul zur Steuerung der Datenübertragung zwischen der Vorrichtung und dem Host-System über die WLAN-Schnittstelle,
ein Diagnose-Modul zur Aufbereitung von Daten zur Kommunikation mit dem Host-System (24),
ein Kommunikations-Modul zur Steuerung der Kommunikation zwischen dem Diagnose-Modul und den Geräten,
wobei das WLAN-Modul und das Diagnose-Modul in einen gemeinsamen WLAN-Prozessor (22) realisiert sind und
das Kommunikations-Modul in einem separaten Kommunikations-Prozessor (30) mit einem echtzeitfähigen Betriebssystem realisiert ist.

2. Vorrichtung nach Anspruch 1, wobei der WLAN-Prozessor (22) ein nichtechtzeitfähiges Betriebssystem aufweist.

3. Vorrichtung nach Anspruch 1 oder 2, die ferner eine USB-Schnittstelle und/oder eine Ethernet-Schnittstelle zur Kommunikation mit dem Host-System (24) aufweist, wobei das WLAN-Modul auch zur Steuerung der Datenübertragung zwischen der Vorrichtung (20) und dem Host-System (24) über die USB-Schnittstelle oder die Ethernet-Schnittstelle eingerichtet ist.

4. Vorrichtung nach einem der vorangehenden Ansprüche, wobei das Diagnose-Modul dazu eingerichtet ist, Nachrichten, die über eine der Schnittstellen von dem Host-System (24) empfangen werden, in Steuerbefehle für die Geräte und Antworten der Geräte in Nachrichten, die an das Host-System (24) gesendet werden, umzuwandeln.

5. Vorrichtung nach einem der vorangehenden Ansprüche, wobei das Kommunikations-Modul als ein Fahrzeugkommunikations-Modul dazu eingerichtet ist, Steuerbefehle des Diagnose-Moduls in Steuersignale gemäß einem definierten Fahrzeug-Kommunikationsprotokoll und Antwortsignale der Geräte in Antworten gemäß einem Kommunikationsprotokoll des WLAN-Prozessors (22) umzusetzen.

6. Vorrichtung nach einem der vorangehenden Ansprüche, wobei das Diagnose-Modul dazu eingerichtet ist, Betriebsdaten der Geräte zu erfassen und zu speichern und/oder Parameter in Bezug auf die Verbindungsqualität zu ermitteln und zu speichern.

7. Vorrichtung nach einem der vorangehenden Ansprüche, wobei der WLAN-Prozessor (22) ein Allzweck-Betriebssystem, wie Linux, aufweist, das mit eine höhere Taktrate und einen größeren Speicher aufweist als das Echtzeit-Betriebssystem des Kommunikations-Prozessors (30).

8. Vorrichtung nach einem der vorangehenden Ansprüche, wobei die Leistungsaufnahme des Kommunikations-Prozessors (30) geringer ist als die Leistungsaufnahme des WLAN-Prozessors (22).

9. Vorrichtung nach einem der vorangehenden Ansprüche, die dazu eingerichtet ist, den WLAN-Prozessor (22) in einen Stromsparmodus zu versetzen, wobei der Kommunikations-Prozessor (30) dazu eingerichtet ist, bei Empfang einer Nachricht den WLAN-Prozessor zu aktivieren.

10. Vorrichtung nach einem der vorangehenden Ansprüche, wobei der WLAN-Prozessor (22) und der Kommunikations-Prozessors (30) auf einer Leiterplatte angeschlossen sind, die eine vollständige galvanische Trennung zwischen den Schnittstellen zur Kommunikation mit dem Host-System (24) und der Diagnose-Schnittstelle zur Kommunikation mit Geräten des Kraftfahrzeuges (26) vorsieht.

11. Vorrichtung nach einem der vorangehenden Ansprüche, mit einem Gehäuse (40), dessen Abmessungen maximal 120 mm x 50 mm x 25 mm betragen, wobei das Gehäuse (40) keine mechanischen Schalter aufweist.

12. Vorrichtung nach Anspruch 3 und einem der vorangehenden Ansprüche, wobei die Ethernet-Schnittstelle ein elektrisches Verbindungssystem mit Kontaktelementen (46) und wenigstens einer Magnetvorrichtung aufweist, um Gegenkontaktelemente eines Adapters (40) mit den Kontaktelementen (46) in Kontakt zu bringen und zu halten.

13. Vorrichtung nach Anspruch 19, wobei die Ethernet-Schnittstelle einen Rücksetzeingang aufweist, der über den Adapter (40), der an die Schnittstelle angeschlossen wird, aktivierbar ist.

14. Vorrichtung nach einem der vorangehenden Ansprüche, wobei die Diagnose-Schnittstelle ein Feldbusschnittstelle, insbesondere eine On-Board-Diagnose, "OBD", -Schnittstelle oder andere Feldbusschnittstelle, wie CAN oder Ethernet, ist und wobei die Kommunikation zwischen dem Host-System (24) und der Diagnose-Schnittstelle über einen Feldbus erfolgt.

15. Vorrichtung nach einem der vorangehenden Ansprüche, wobei die Geräte Steuergeräte, Sensoren oder Steuereinheiten eines Kraftfahrzeuges oder einer Fertigungsanlage sind.
